# EUROPEAN PATENT SPECIFICATION

(11) **EP 1 831 054 B1**
(45) Date of publication and mention of the grant of the patent: **12.03.2008**
(21) Application number: 05821446.1
(22) Date of filing: 22.12.2005
(51) Int. Cl.: B60R 11/00

(54) **VEHICLE STORAGE SYSTEM**
VERSTAUSYSTEM FÜR FAHRZEUG
SYSTEME DE STOCKAGE DE VEHICULE

(30) Priority: 23.12.2004 GB 0428278
(43) Date of publication of application: 12.09.2007
(73) Proprietor: Nissan Motor Manufacturing (UK) Ltd., Cranfield, Bedfordshire MK43 0DB (GB)
(72) Inventor: FROST, Daniel, Nissan Technical Centre Europe Ltd, Bedfordshire MK43 0DB (GB); CONNOLLY, B., Nissan Technical Centre Europe Ltd, Bedfordshire MK43 0DB (GB); SMART, Chris, Nissan Technical Centre Europe Ltd, Bedfordshire MK43 0DB (GB); BRADLEY, A., Nissan Technical Centre Europe Ltd, Bedfordshire MK43 0DB (GB)
(74) Representative: Hufton, Victoria Alice
(86) International application number: PCT/GB2005/005008
(87) International publication number: WO 2006/067463

(56) References cited:
- EP-A- 0 633 162
- EP-A- 1 232 911
- EP-A- 1 486 374
- DE-C1- 10 033 375

## Description

The present invention relates to a vehicle storage system and more particularly but not exclusively to a storage system providing a warning of the presence of stored items.

Traditionally most vehicles include a storage compartment incorporated in the vehicle dashboard, often referred to as the glove box. The glove box is generally located in the dashboard away from the instrument panel usually in line with the front passenger seat. Access to the glove box by the driver therefore involves him leaning over the gear lever and/or handbrake in the centre of the vehicle to reach the release catch for the glove box lid. This operation is not always easy, especially for persons of less than average height, and is certainly dangerous if the vehicle is in motion.

More recently vehicles have included a further storage compartment in a centre console which rises up from the vehicle floor between the driver and front passenger seats. The centre console storage box is a far more convenient location for the driver to place personal items as he has ready access to the storage box throughout the journey and the items can be quickly and easily removed before leaving the vehicle.

Unfortunately, it is very easy for a driver in a hurry or otherwise distracted to forget the items he has placed in the centre console box when leaving the vehicle, especially as the driver cannot see into the box when the lid is closed. Items left may include his wallet, loose credit cards and/or cash, house keys, mobile phone, driving licence, etc. Forgetting any of these items can cause much inconvenience to the driver who may be on a train or plane before he realises they have been left behind. Additionally, with petty crime on the increase, these items are frequently the target of thieves who can readily remove them from the vehicle if broken into.

EP 0 633 162 A discloses a storage system according to the preamble of claim 1.

Accordingly, it is an object the invention to provide a reminder to the driver to remove stored items from the centre console box before leaving the vehicle.

In this regard, the present invention resides in a vehicle storage system having the features of claim 1.

By means of the invention, the driver is provided with a timely warning that one or more items have been left in the storage box and then has an opportunity to remove any one or all of those items before leaving. Of course, if there are no items in the storage box, then the alarm will not be activated.

As discussed above, the driver has a greater tendency to leave his personal effects in the centre console box, reserving the glove box for items that only need to be accessed from time to time. Accordingly, whilst the system may be used in connection with the glove box, it is particularly applicable to use with the centre console box. Alternatively, the vehicle may be designed to incorporate another storage box specifically for the purpose of the invention. For convenience, the term storage box is used collectively hereinafter to denote the glove box, the centre console box and indeed any other storage box in the vehicle.

For greatest effect, the alarm comprises an audible warning, such as a buzzer, as this does not rely on the driver looking into the vehicle and noticing a visible warning, such as a flashing light, when he is on the verge of stepping out of the vehicle. As most vehicles already include means for generating an audible alarm, for example the alarm generated when the keys are left in the ignition and the driver's door is opened, the audible alarm of the system according to the invention may be integrated with an existing alarm. In the latter case, the audible alarm for the storage system may be set at a specific frequency different to the frequency emitted for other warnings.

The audible alarm preferably has a volume that is readily heard by the driver, but is not so loud as to be readily discernible by persons outside the vehicle. In this way, potential thieves loitering in the vicinity of the vehicle, for example in a car park, are not alerted to the fact that items are in the storage box.

In order not to annoy the driver with unnecessary alarms, it is preferred that the alarm is activated only when both the driver's door is opened and the vehicle ignition is switched off. In this way, the alarm is not set off at times when the driver intends to return to the vehicle almost immediately.

Once the alarm has been activated to indicate the presence of items stored in the box, the alarm may then be deactivated by removing the items or by closing the driver's door. Alternatively, or in addition thereto, the alarm may be deactivated simply upon opening the lid of the storage box. For example, a micro-switch in the storage box to detect whether the lid is open or shut may be provided. Such a micro-switch may be located on the rim of the box, for example between a pair of hinges for the lid, so that the switch is raised when the lid is opened and depressed when the lid is closed. Of course, there may be occasions when the driver intends to leave certain items in the storage box and the driver therefore has the option of ignoring the warning and closing the vehicle door after him to deactivate the alarm.

Some drivers will choose to use the storage box to hold certain items on a more or less permanent basis, for instance items such as loose change for parking meters or CD cases, and it is therefore preferred that the system is provided with means for overriding or "disabling" either or both of the sensor and the alarm such that the system can be deactivated.

If the system is provided with a disabling function, then it is further preferred that the system also includes an indicator to remind the driver that the system has been deactivated. Such a reminder feature is particularly useful when more than one person regularly drives the vehicle and the various drivers have different preferences with regard to use of the storage box. The reminder feature will ideally comprise a visible warning rather than an audible one in order not to negate its usefulness.

It is desirable that any visible warning should not be readily discernible to anyone outside the vehicle in order not to alert them to fact that the system is disabled, therefore indicating the likelihood that the storage box is in use when the vehicle is unoccupied.

As an alternative to alerting the driver when the system has been disabled, or in addition thereto, it is also useful to provide the driver with some indication that the system is enabled. Advantageously, the system emits an audible signal to confirm that the system is enabled, for example, a series of "beeps" may be emitted upon closing the storage box lid. In this way, when a driver places an item in the box, he is provided with reassurance that the system is operational.

The sensor used to detect an object in the storage box may take any convenient form and may comprise a plurality of sensors. The sensor may for example be in the form of a weight sensor whereby the weight of any item resting on the floor of the storage box is detected. Such a weight sensor may comprise a pivoting sprung floor at the base of the storage box and a switch, such as a micro-switch, which is depressed as the floor pivots down under the weight of an object in the storage box. Other means for sensing the presence of items in the box by their weight may include one or more pressure pads or strain gauge assemblies.

Another type of sensor may be in the form of a volume sensor whereby any object occupying space in the storage compartment is detected. Such a volume sensor may comprise a rising sprung floor in the storage box whereby the floor rises to the top of the box when the box is empty and completes a circuit with an electrical contact located at the top of the box. When items are placed in the storage box, and the lid of the box is closed, the lid and object will act to push the floor of the box down and so break the contact. In this way, the presence of an object in the storage box is detected.

Obviously, where the items are very light and/or very small, such as banknotes or tickets, it may be difficult for either of the aforementioned weight and volume sensors to detect their presence. This may be overcome by adjusting the sensitivity of the sensors or, more preferably, by providing a combination of sensors such that the majority of items likely to be stored are detected.

An alternative sensor for use in the system of the invention is in the form of a light sensor. A light sensor is particularly advantageous in that it generally does not involve any moving parts and therefore is more simple and reliable than the alternative weight and/or volume sensors above.

The light sensor may comprise one or more light sources located in the interior of the storage box and means for detecting any interruption and/or reduction in intensity of the emitted light whereby the presence of an item in the box is established. The light source may be a visible or non-visible light source, such as a lamp, LED, laser or infra-red light. Lamps and LEDs are most convenient for a number of reasons, not least in that they are relatively inexpensive and readily available.

More preferably, the light sensor comprises a light source located in the storage box, typically on a wall or the lid, and a light dependent resistor (LDR) located on the floor of the box. Ideally the LDR lies flush with the interior surface of the box floor. The LDR acts as a light gate in that when an item is placed in the storage box, it at least partially obscures the LDR resulting in an increase in resistance. This increase in resistance results in a voltage increase signalling that an item is present in the box.

Depending on the size of the storage box, it is conceivable that very small items such as coins may not be detected as they may not obscure the LDR. However, as it is considered more important that larger items such as credit cards, wallets, tickets and the like be detected, this is not a significant disadvantage. On the other hand, the inclusion of a plurality of LDRs spaced apart on the floor of the box may be contemplated to increase the likelihood of small items being detected. Of course, as already indicated, the system of the invention may incorporate a plurality of sensors of different types.

A further advantage in including a plurality of sensors, such as an array of LDRs, is that failure of one of the sensors will not necessarily result in failure of the system as a whole. Only one of the sensors needs to be triggered to generate a signal that the box contains an item.

Advantageously, the light source of the light sensor may be linked to the vehicle courtesy lights such that when the ignition is initially switched off, both the light sensor light source and courtesy lights are illuminated. In this way, the light sensor does not draw any power unless the courtesy lights are illuminated. Illumination of the light sensor light source effectively primes the sensor such that if an object is present in the storage box, the LDR will be in shade. Accordingly, when the driver's door is opened the alarm will be triggered. If the driver chooses to remove items from the storage box the alarm will cease, or if the driver chooses to ignore the alarm, it will cease anyway when the driver's door is closed and the courtesy lights go out.

In order to direct the light from the light source down towards the LDR on the base of the box, it is preferred to provide a light shield above the light source. Such a light shield has an additional benefit in protecting the light source, such as a bulb, from damage caused by items thrown into the storage box. Such a light shield may be formed separately from the box and adhered to the box interior or may be moulded as an integral part of the box. For ease of maintenance, the light source may be removed from the inside of the storage box, so that changing a bulb for example is a relatively easy task.

In a preferred embodiment of the invention, the warning system includes a control circuit for which there are inputs from the LDR, the lid micro-switch, the vehicle door and the ignition switch and output to the alarm buzzer. The lamp in the console box uses interior light logic and is therefore connected to that circuit.

The control circuit takes signals from all the circuit inputs and processes these signals to decide whether or not to activate the alarm. Specifically, the alarm is activated when the ignition is off, AND the lid is shut, AND the LDR is in shade, AND the vehicle door is opened. A simple logic circuit of AND and NOT gates may be used to produce the desired output.

In order to sense whether or not the vehicle door is opened, a wire may be spliced into the line for the door switch, such a line already being a feature of most vehicles. In this way, when the door is opened, the plunger in the door switch grounds the signal line to the vehicle body. This may be used as a pull-down signal in a potential divider with the control circuit arranged such that an earth signal at this input corresponds to the door being open.

Alternatively, instead of the lamp and door switch signals being spliced into the vehicle's existing wiring system, the vehicle body electrical control module may be adapted to incorporate these signals.

Since the output of a logic integrated circuit is generally not sufficiently powerful to operate an alarm buzzer, a transistor is preferably included to buffer the output.

For convenience, the control circuit for the warning system may be housed in a control box directly beneath the storage box. This has the advantage of reducing the wiring run to the lid micro-switch and also permits the LDR to be packaged with the control box, protruding from the top, so that it can then be aligned with a hole in the floor of the storage box.

In addition to the warning system of the invention being fitted as standard to new vehicles, it is also contemplated that the system may be installed as an option by simply plugging it in to a modified vehicle harness.

The invention will now be described, by way of example only, with reference to the following drawings in which:
Figure 1 is a flow diagram showing the operation of a vehicle warning system in accordance with one aspect of the invention;
Figure 2 is a perspective view of a centre console box incorporating a warning system in accordance with another aspect of the invention; and
Figure 3 is a cross-sectional view through line A-A of the centre console box of Figure 2.

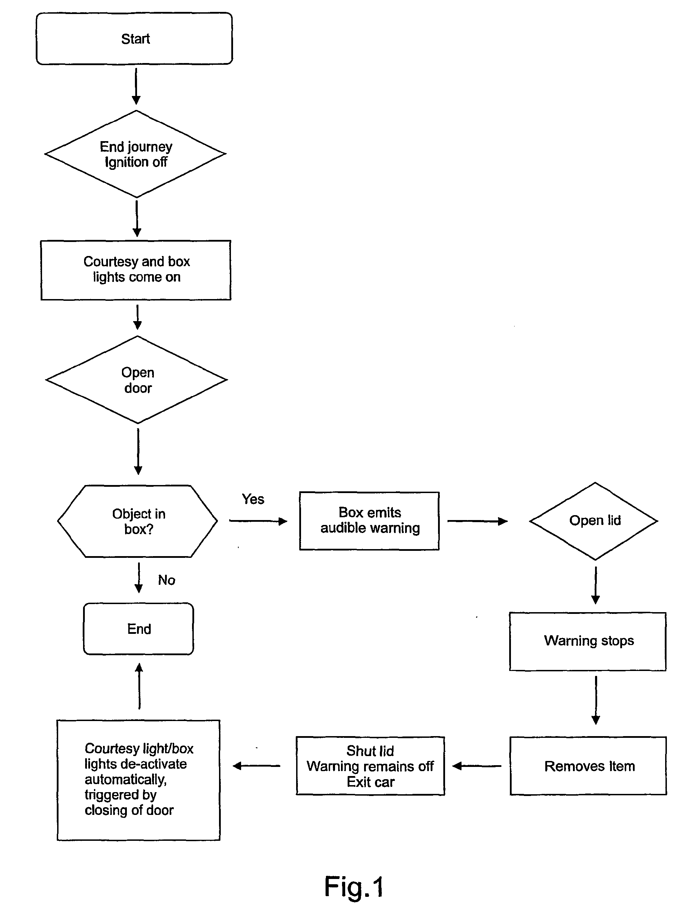

Figure 1 shows a flow diagram illustrating how a warning system in accordance with one aspect of the invention operates. The diagram assumes that the driver has just stopped the car at the end of a journey and this action corresponds to the "start" function for the system of the invention.

Once the driver has parked the car, he switches the ignition off. This provides a signal for both the courtesy light and the light sensor lamp in the centre console box to be illuminated. The driver then opens the vehicle door in preparation to leave the vehicle. If no items are left in the box, the alarm will not be triggered and the driver may proceed to exit the vehicle without further ado. On the other hand, if items have been left in the box, the alarm is triggered whereupon the driver opens the box lid to remove the items he has left in the box.

The alarm is deactivated upon opening the box lid. The driver then closes the lid and the alarm remains off as the box is now empty. The driver exits the vehicle and shuts the car door whereupon the light in the box is extinguished along with the courtesy lights.

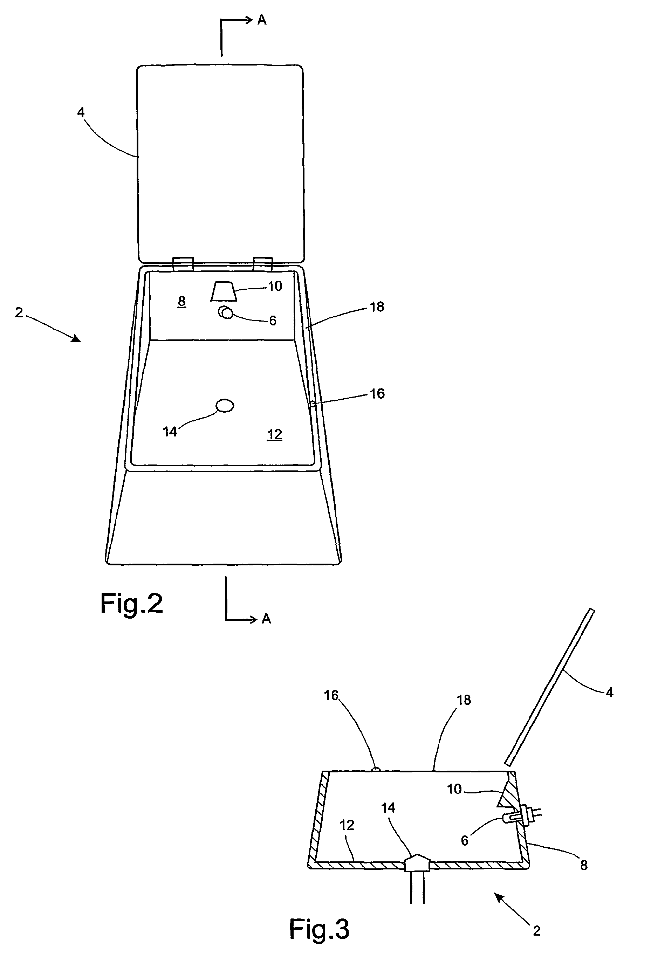

Figures 2 and 3 show a centre console box (2) with lid (4) open to expose the interior. Inside the box (2) is a lamp (6) which extends through the rear wall (8) of the box (2). The lamp (6) is connected in parallel to the vehicle's interior (courtesy) light circuit (not shown) so that it is switched on at the same time as the interior lights and does not otherwise draw power from the circuit. The light from the lamp (6) is directed downwards towards the floor (12) of the box and the lamp itself is at least partially protected from items placed or thrown into the box (2) by means of bulb shield (10) above.

Extending through the floor (12) of the box (2) is a light dependent resistor (LDR) (14). The LDR (14) is centrally located on the floor (12) such that a credit card sized item would obscure it, even if the credit card slid into a corner.

Any item, such as a credit card, at least partially obscuring the LDR (14) will result in an increase in resistance as the light reaching the LDR (14) from the lamp (6) is reduced or eliminated. This increase in resistance provides an increase in voltage signalling the presence of a stored item.

A micro-switch (16) is positioned around the rim (18) of the console box (2) such that it is depressed when the lid (4) is closed to complete a circuit with the alarm buzzer (not shown). When the lid (4) is opened, the micro-switch (16) rises to break the circuit and deactivate the alarm buzzer. The buzzer will not be activated in any event unless the driver's door is also opened and an item has been detected.

It will be appreciated that the present invention may be embodied in many specific forms without departing from its essential attributes. Accordingly, reference should be made to the appended claims and other general statements herein rather than to the foregoing specification as indicating the scope of the invention.

## Claims

1. A storage system for use in a vehicle, the system comprising a storage compartment (2), a first sensor (14) for detecting the presence of a stored item in the compartment, **characterized in that** the system comprises a second sensor for detecting whether the driver's door is open or closed and an alarm responsive to the first (14) and second sensors whereby the alarm is activated when an item is detected and the driver's door is opened.

2. A system according to claim 1, wherein the storage compartment comprises a centre console box (2).

3. A system according to any preceding claim, wherein the alarm comprises an audible signal.

4. A system according to any preceding claim, further comprising a third sensor for detecting when the vehicle ignition is switched off and the alarm is activated only when both the driver's door is opened and the ignition is switched off.

5. A system according to any preceding claim, further comprising means (16) for deactivating the alarm upon opening the lid (4) of the storage compartment. (2).

6. A system according to claim 5, wherein the deactivation means comprises a micro-switch (16) located on rim (18) of the storage compartment (2) and electrically connected to the alarm circuit, and wherein the alarm circuit is completed when the compartment lid (4) is closed and broken when the lid (4) is opened.

7. A system according to any preceding claim, further comprising means for temporarily disabling the alarm.

8. A system according to claim 7, further comprising a visible warning to alert the driver that the system is in a disabled state.

9. A system according to any preceding claim, wherein the sensor to detect the presence of a stored item in the compartment comprises a light sensor (14).

10. A system according to claim 9, wherein the light sensor comprises a light source (6) for illuminating the storage box (2) and means (14) for detecting any reduction in light intensity from the light source to establish the presence of an item in the compartment.

11. A system according to claim 10, wherein the light reduction detector comprises a light dependent resistor or LDR (14).

12. A system according to claim 11, wherein the LDR is located on the floor (12) of the compartment (2).

13. A system according to claim 12, wherein a plurality of LDRs is located on the floor (12) of the compartment (2).

14. A system according to any of claims 10 to 13, wherein the light source (6) is linked to the vehicle internal lighting system such that the light source (6) is illuminated when the ignition is initially switched off.

15. A system according to any of claims 11 to 14, wherein each of the LDR, a micro-switch (16) on the lid (4) of the compartment (12) the driver's door and the ignition switch supplies input to a control circuit and the control circuit delivers output to the alarm.

16. A system according to claim 15, wherein the alarm is activated when the ignition is off, AND the lid (4) is shut, AND the LDR is in shade, AND the vehicle door is opened.

17. A system according to claim 15 or 16, wherein the control circuit is housed in a control box directly beneath the storage compartment (2).

18. A system according to any preceding claim adapted for installation in a vehicle as an optional feature by connecting to a modified vehicle harness.

## Patentansprüche

1. Aufbewahrungssystem zur Verwendung in einem Fahrzeug, wobei das System ein Aufbewahrungsfach (2), einen ersten Sensor (14) zum Erkennen der Anwesenheit eines aufbewahrten Gegenstands in dem Fach umfasst, **dadurch gekennzeichnet, dass** das System einen zweiten Sensor zum Erkennen, ob die Fahrertür geöffnet oder geschlossen ist und einen auf den ersten (14) und den zweiten Sensor ansprechenden Alarm umfasst, wobei der Alarm aktiviert wird, wenn ein Gegenstand erkannt wird und die Fahrertür geöffnet wird.

2. System nach Anspruch 1, wobei das Aufbewahrungsfach einen Mittelkonsolenkasten (2) umfasst.

3. System nach einem der vorangehenden Ansprüche, wobei der Alarm ein hörbares Signal umfasst.

4. System nach einem der vorangehenden Ansprüche, weiter umfassend einen dritten Sensor zum Erkennen, wann die Fahrzeugzündung ausgeschaltet ist und der Alarm nur aktiviert wird, wenn die Fahrertür geöffnet wird und die Zündung ausgeschaltet ist.

5. System nach einem der vorangehenden Ansprüche, weiter umfassend ein Mittel (16) zum Deaktivieren des Alarms beim Öffnen des Deckels (4) des Aufbewahrungsfachs (2).

6. System nach Anspruch 5, wobei das Deaktivierungsmittel einen Mikroschalter (16) umfasst, der sich auf dem Rand (18) des Aufbewahrungsfachs (2) befindet und elektrisch mit dem Alarmstromkreis verbunden ist und wobei der Alarmstromkreis geschlossen wird, wenn der Deckel (4) des Fachs geschlossen wird, und unterbrochen wird, wenn der Deckel (4) geöffnet wird.

7. System nach einem der vorangehenden Ansprüche, weiter umfassend ein Mittel zum vorübergehenden Abschalten des Alarms.

8. System nach Anspruch 7, weiter umfassend eine sichtbare Warnung, um den Fahrer zu warnen, dass sich das System in einem abgeschalteten Zustand befindet.

9. System nach einem der vorangehenden Ansprüche, wobei der Sensor zum Erkennen der Anwesenheit eines aufbewahrten Gegenstands in dem Fach einen Lichtsensor (14) umfasst.

10. System nach Anspruch 9, wobei der Lichtsensor eine Lichtquelle (6) zum Beleuchten des Aufbewahrungskastens (2) und ein Mittel (14) zum Erkennen einer allfälligen Reduktion der Lichtintensität von der Lichtquelle umfasst, um die Anwesenheit eines Gegenstands in dem Fach nachzuweisen.

11. System nach Anspruch 10, wobei der Lichtreduktionsdetektor einen Fotowiderstand oder LDR (14) umfasst.

12. System nach Anspruch 11, wobei sich der LDR auf dem Boden (12) des Fachs (2) befindet.

13. System nach Anspruch 12, wobei sich mehrere LDRs auf dem Boden (12) des Fachs (2) befinden.

14. System nach einem der Ansprüche 10 bis 13, wobei die Lichtquelle (6) mit dem Fahrzeuginnenbeleuchtungssystem verbunden ist, so dass die Lichtquelle (6) leuchtet, wenn die Zündung anfänglich ausgeschaltet wird.

15. System nach einem der Ansprüche 11 bis 14, wobei der LDR, ein Mikroschalter (16) am Deckel (4) des Fachs (2), die Fahrertür und der Zündschalter jeweils einen Eingang an einen Steuerkreis liefern und der Steuerkreis einen Ausgang an den Alarm liefert.

16. System nach Anspruch 15, wobei der Alarm aktiviert wird, wenn die Zündung aus ist UND der Deckel (4) geschlossen ist, UND der LDR im Schatten ist UND die Fahrzeugtür geöffnet wird.

17. System nach Anspruch 15 oder 16, wobei der Steuerkreis in einem Steuerkasten direkt unter dem Aufbewahrungsfach (2) untergebracht ist.

18. System nach einem der vorangehenden Ansprüche, das zur Installation in einem Fahrzeug als optionales Merkmal durch Anschließen an einen abgeänderten Fahrzeugkabelbaum angepasst ist.

## Revendications

1. Système de rangement destiné à être utilisé dans un véhicule, le système comprenant un compartiment de rangement (2), un premier capteur (14) pour détecter la présence d'un article rangé dans le compartiment, **caractérisé en ce que** le système comprend un deuxième capteur pour détecter si la porte du conducteur est ouverte ou fermée et une alarme sensible aux premier (14) et deuxième capteurs de telle sorte que l'alarme soit activée quand un article est détecté et la porte du conducteur est ouverte.

2. Système selon la revendication 1, dans lequel le compartiment de rangement comprend une boîte sur console centrale (2).

3. Système selon l'une quelconque des revendications précédentes, dans lequel l'alarme comprend un signal sonore.

4. Système selon l'une quelconque des revendications précédentes, comprenant en outre un troisième capteur pour détecter quand le contact du véhicule est coupé et l'alarme est activée uniquement quand à la fois la porte du conducteur est ouverte et le contact est coupé.

5. Système selon l'une quelconque des revendications précédentes, comprenant en outre un moyen (16) pour désactiver l'alarme à l'ouverture du couvercle (4) du compartiment de rangement (2).

6. Système selon la revendication 5, dans lequel le moyen de désactivation comprend un micro-interrupteur (16) situé sur le bord (18) du compartiment de rangement (2) et connecté électriquement au circuit d'alarme, et dans lequel le circuit d'alarme est fermé quand le couvercle du compartiment (4) est fermé et rompu quand le couvercle (4) est ouvert.

7. Système selon l'une quelconque des revendications précédentes, comprenant en outre un moyen pour désactiver temporairement l'alarme.

8. Système selon l'une quelconque des revendications précédentes, comprenant en outre un avertissement visible pour alerter le conducteur que le système est dans un état désactivé.

9. Système selon l'une quelconque des revendications précédentes, dans lequel le capteur de détection de la présence d'un article rangé dans le compartiment comprend un capteur de lumière (14).

10. Système selon la revendication 9, dans lequel le capteur de lumière comprend une source de lumière (6) pour éclairer la boîte de rangement (2) et un moyen (14) pour détecter toute réduction d'intensité de la lumière provenant de la source de lumière afin d'établir la présence d'un article dans le compartiment.

11. Système selon la revendication 10, dans lequel le détecteur de réduction de lumière comprend une résistance dépendant de la lumière ou LDR (14).

12. Système selon la revendication 11, dans lequel la LDR est située sur le fond (12) du compartiment (2).

13. Système selon la revendication 12, dans lequel une pluralité de LDR est placée sur le fond (12) du compartiment (2).

14. Système selon l'une quelconque des revendications 10 à 13, dans lequel la source de lumière (6) est reliée au système d'éclairage interne du véhicule de telle sorte que la source de lumière (6) soit éclairée quand le contact est initialement coupé.

15. Système selon l'une quelconque des revendications 11 à 14, dans lequel chacun de la LDR, d'un micro-interrupteur (16) sur le couvercle (4) du compartiment (2), de la porte du conducteur et du commutateur d'allumage fournit une entrée à un circuit de commande et le circuit de commande fournit une sortie à l'alarme.

16. Système selon la revendication 15, dans lequel l'alarme est activée quand l'allumage est coupé, ET le couvercle (4) est fermé, ET la LDR est dans l'ombre, ET la porte du véhicule est ouverte.

17. Système selon la revendication 15 ou 16, dans lequel le circuit de commande est logé dans une boîte de commande placée directement en dessous du compartiment de rangement (2).

18. Système selon l'une quelconque des revendications précédentes adapté pour être installé dans un véhicule comme fonction optionnelle par connexion à une distribution électrique modifiée de véhicule.
